# EUROPÄISCHE PATENTSCHRIFT

(11) **EP 0 672 238 B1**
(45) Veröffentlichungstag und Bekanntmachung des Hinweises auf die Patenterteilung: **15.01.1997**
(21) Anmeldenummer: 93903947.5
(22) Anmeldetag: 10.02.1993
(51) Int. Cl.: G01F 1/66

(54) **TRICHTEREINLASS UND -AUSLASS FÜR ULTRASCHALL-GASZÄHLER**
FUNNEL INLET AND OUTLET FOR ULTRASONIC GAS METERS
ENTREE ET SORTIE SOUS FORME D'ENTONNOIR POUR COMPTEURS A GAZ ULTRASONORES

(30) Priorität: 13.02.1992 EP 92102421
(43) Veröffentlichungstag der Anmeldung: 20.09.1995
(73) Patentinhaber: SIEMENS AKTIENGESELLSCHAFT, 80333 München (DE)
(72) Erfinder: SPENDEL, Karl, D-8500 Nürnberg 60 (DE)
(86) Internationale Anmeldenummer: EP9300324
(87) Internationale Veröffentlichungsnummer: WO9316357

(56) Entgegenhaltungen:
- EP-A- 347 096
- WO-A-90/05283
- DE-U- 9 201 844
- FR-A- 2 369 566
- GB-A- 2 205 645

## Beschreibung

Die Erfindung bezieht sich auf einen Ein- und Auslaß an den Enden eines mit Ultraschallwandlern versehenen Meßrohres mit einem Meßkanal zur Gasströmungsmessung, wobei der Ein- und Auslaß eine Umlenkung des in den bzw. aus dem Meßkanal ein- bzw. ausströmenden Gases bewirkt.

Zur Gasströmungsmessung finden neben den altbewährten Balgengaszählern auch Ultraschall-Gasströmungsmesser Anwendung. Beim Einsatz von Ultraschall-Gasströmungsmessern als Gaszähler stellt sich das Problem, daß der Anschluß an parallel nach oben weisende Rohranschlüsse gemäß einer sogenannten U6-Anordnung als Standard-Konfiguration vorgenommen werden muß. Weiterhin ist der zum Einbau eines Ultraschall-Gasströmungsmessers frei stehende Raum begrenzt, so daß zur Ultraschall-Gasströmungsmessung nur Meßrohre begrenzter Länge eingesetzt werden können. Diese Einschränkung hat aber Einfluß auf die Meßgenauigkeit und wird sogar noch verstärkt, wenn die Meßrohrlänge wegen seitlich aufgesetzter Rohrstutzen zum Ein- und Auslaß des Gases zusätzlich verkürzt wird. Eine derartige Lösung hat außerdem eine verzerrte Kennlinie zur Folge.

Ein Ein- und Auslaß der oben genannten Art ist in dem Patent GB 2 205 645 sowie in WO-A-9005283 offenbart. Hier wird die Strömungsgeschwindigkeit einer Flüssigkeit gemessen, die durch ein U-förmig ausgeführtes Meßrohr geleitet ist. Die Enden des Meßrohrs dienen als Ein- und Auslaß und sind gegenüber dem Bereich, der als Meßstrecke fungiert, um 90° abgewinkelt. Der Querschnitt des Meßrohrs ist an allen Stellen gleich groß.

Der europäischen Patentanmeldung 0 347 096 ist ein Meßkanal mit Ultraschallwandlern und trichterförmigem Ein- und Auslaß zu entnehmen, die aber beide koaxial zum Meßrohr angeordnet sind. Die beiden Trichter bewirken jedoch keine Umlenkung des hindurchströmenden Gases.

Der vorliegenden Erfindung liegt die Aufgabe zugrunde, einen platzsparenden Ein- und Auslaß mit einer Strömungsumlenkung für Ultraschall-Gasströmungsmesser mit geringem Druckverlust, hoher Strömungsliniarität und gasunabhängiger Kalibrierung zu schaffen. Die Aufgabe wird gelöst durch eine Vorrichtung gemäß Anspruch 1. Weitere vorteilhafte Ausgestaltungen des Trichterein- und -auslasses sind in den Unteransprüchen beschrieben.

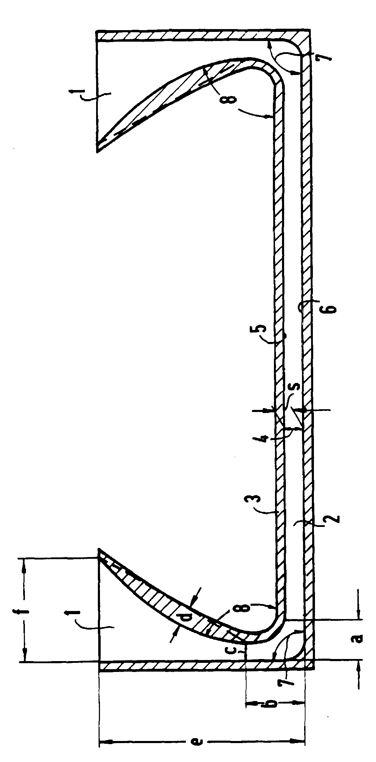

In der Zeichnung ist ein Ausführungsbeispiel eines erfindungsgemäßen Trichterein- und -auslasses dargestellt. Die Figur zeigt einen Trichterein- und -auslaß an den Enden eines Meßrohrs 3 in Form von rechtwinklig abgebogenen Hörnern 1. Durch diese Hörner 1 strömt das Gas in den Meßkanal 2 des Meßrohres 3 ein bzw. aus diesem heraus. Innerhalb des geradlinigen Bereichs des Meßkanals 2 befindet sich die Meßstrecke, an deren Enden zur Messung hier nicht dargestellte Ultraschallwandler angeordnet sind. Die Breite 4 des Meßkanals 2 beträgt s. Die Ausgestaltung der Hörner ist im folgenden auf dieses Breitenmaß s bezogen. Der Meßkanal 2 wird in seiner Breite von den gegenüberliegenden Kanalwänden 5, 6 begrenzt, die im Endbereich zur Ausbildung der Hörner 1 abgekrümmt sind. Dabei bildet sich ausgehend von der Kanalwand 6 ein Außenwinkel 7 und ausgehend von der Kanalwand 5 ein Innenwinkel 8. Der Außenwinkel 7 beträgt beim Ausführungsbeispiel 90°. Der Schenkel des Außenwinkels 7, der gegenüber dem durch den Meßkanal 2 gebildeten Schenkel abgewinkelt ist, weist eine Länge von 10 s auf. Die Krümmung der den Innenwinkel 8 bildenden Kanalwand liegt innerhalb des Abstands a von dem abgekrümmten Schenkel der den Außenwinkel 7 bildenden Kanalwand 6. Er beträgt im vorliegenden Beispiel etwa 2 s. Der Trichterein- und -auslaß 1 beginnt sich im Abstand b von dem durch den Meßkanal 2 gebildeten Schenkel des Außenwinkels 7 aufzuweiten. Der Abstand b beträgt etwa 3 s. Die Breite c des Trichterein- und -auslasses 1 an der Stelle der Aufweitung ist etwa gleich der Breite s des Meßkanals. Der Schenkel des Innenwinkels 8, der gegenüber den durch den Meßkanal 2 gebildeten Schenkel abgewinkelt ist, verläuft bis auf eine Einstülpung d von der Größe s linear. Die Endbreite f der Öffnung am Trichterein- und auslaß 1 ist etwa gleich der 5-fachen Breite s des Meßkanals 2.

Bei Einbau des Meßrohres 2 in ein Gehäuse als Verbindungselement zwischen zwei separaten, relativ großvolumigen Kammern unterliegt das strömende Gas einer starken Geschwindigkeitsänderung. Die erfindungsgemäße Hornkonstruktion lenkt das Gas mit weichem Übergang um 90° um und sorgt für die notwendige Geschwindigkeitstransformation zwischen dem durch die Kammern vorgelagerten Puffervolumen und dem Meßkanal. Das Horn weitet sich vom rechteckigen Kanalquerschnitt mit einer Höhe von etwa 30 mm und einer Breite von 6 mm zur Rohrmitte hin bis zu einem quadratischen Querschnitt mit 30 mm Seitenlänge auf. Eine annäherend exponentielle Krümmung im Verlauf der Aufweitung des Hornes wie in der Figur dargestellt hat sich zur Erfüllung der obigen Anforderungen als besonders günstig erwiesen.

## Patentansprüche

1. Trichterein- und -auslaß (1) an den Enden eines mit Ultraschallwandlern versehenen Meßrohres (3) mit einem Meßkanal (2) zur Gasströmungsmessung, wobei der Trichterein- und -auslaß (1) eine 90°-Umlenkung des in den bzw. aus dem Meßkanal (2) ein- bzw. ausströmenden Gases bewirkt und wobei die die Breite des Meßkanals (2) bildenden Wände (5,6) einen Abstand s voneinander aufweisen und im Bereich des Trichterein- und -auslasses (1) einen Außenwinkel (7) und einen Innenwinkel (8) bildend gekrümmt sind und der Außenwinkel (7) 80 bis 100° beträgt.

2. Trichterein- und -auslaß (1) nach Anspruch 1, **dadurch gekennzeichnet,** daß die Krümmung der den Innenwinkel (8) bildenden Kanalwand (5) innerhalb des Abstands a von dem abgekrümmten Schenkel der den Außenwinkel (7) bildenden Kanalwand (6) liegt, wobei der Abstand a 1,6 bis 2,4 s beträgt.

3. Trichterein- und -auslaß (1) nach Anspruch 1 oder 2, **dadurch gekennzeichnet,** daß die Aufweitung des Ein- und Auslasses (1) im Abstand b = 2,4 bis 3 s von dem durch den Meßkanal (2) gebildeten Schenkel des Außenwinkels (7) beginnt und die Breite des Ein- und Auslasses (1) an dieser Stelle c = 0,8 bis 1,2 s beträgt.

4. Trichterein- und -auslaß (1) nach einem der vorangehenden Ansprüche, **dadurch gekennzeichnet,** daß der Schenkel des Innenwinkels (8), der gegenüber dem durch den Meßkanal (2) gebildeten Schenkel abgewinkelt ist, bis auf eine Einstülpung d von 0 bis 1,2 s linear verläuft.

5. Trichterein- und -auslaß (1) nach einem der vorangehenden Ansprüche, **dadurch gekennzeichnet,** daß der Schenkel des Außenwinkels (7), der gegenüber dem durch den Meßkanal (2) gebildeten Schenkel (6) abgewinkelt ist, eine Länge e von 8 bis 12 s aufweist.

6. Trichterein- und -auslaß (1) nach einem der vorangehenden Ansprüche, **dadurch gekennzeichnet,** daß die Endbreite f der Öffnung am Ein- und Auslaß (1) 4 bis 6 s beträgt.

## Claims

1. Funnel inlet and funnel outlet (1) at the ends of a measurement pipe (3), provided with ultrasonic transducers, with a measurement channel (2) for gas flow measurement, in which the funnel inlet and funnel outlet (1) effects a 90° deflection of the gas flowing into or respectively out of the measurement channel (2) and in which the walls (5, 6) forming the width of the measurement channel (2) exhibit a spacing s from one another and are curved, in the region of the funnel inlet and funnel outlet (1), forming an outer angle (7) and an inner angle (8), and the outer angle (7) is 80 to 100°.

2. Funnel inlet and funnel outlet (1) according to Claim 1, characterized in that the curvature of the channel wall (5) forming the inner angle (8) lies within the spacing a from the curved-away limb of the channel wall (6) forming the outer angle (7), the spacing a being 1.6 to 2.4 s.

3. Funnel inlet and funnel outlet (1) according to Claim 1 or 2, characterized in that the broadening of the inlet and outlet (1) begins at the spacing b = 2.4 to 3 s from that limb of the outer angle (7) which is formed by the measurement channel (2), and the width c of the inlet and outlet (1) at this position is c = 0.8 to 1.2 s.

4. Funnel inlet and funnel outlet (1) according to one of the preceding claims, characterized in that the limb of the inner angle (8), which is angled off in relation to the limb formed by the measurement channel (2), extends linearly apart from an in-turned portion d of 0 to 1.2 s.

5. Funnel inlet and funnel outlet (1) according to one of the preceding claims, characterized in that the limb of the outer angle (7), which is angled off in relation to the limb (6) formed by the measurement channel (2), exhibits a length e of 8 to 12 s.

6. Funnel inlet and funnel outlet (1) according to one of the preceding claims, characterized in that the end width f of the opening at the inlet and outlet (1) is 4 to 6 s.

## Revendications

1. Entrée et sortie (1) en entonnoir situées aux extrémités d'une tube (3) de mesure, muni de transducteurs ultrasonores et comportant un canal (2) de mesure servant à mesurer l'écoulement gazeux, l'entrée et la sortie (1) en entonnoir provoquant une déviation de 90° du gaz qui entre dans le canal (2) de mesure et du gaz qui en sort, et les parois (5, 6) qui forment la largeur du canal (2) de mesure étant à une distance s l'une de l'autre et étant courbées de manière à former dans la partie de l'entrée et de la sortie (1) en entonnoir un angle (7) extérieur et un angle (8) intérieur, et l'angle (7) extérieur étant de 80 à 100°.

2. Entrée et sortie (1) en entonnoir suivant la revendication 1, caractérisées en ce que la courbure de la paroi du canal formant l'angle (8) intérieur est comprise à l'intérieur de la distance a par rapport au côté recourbé de la paroi (6) formant l'angle (7) extérieur, la distance a étant de 1,6 à 2,4 s.

3. Entrée et sortie (1) en entonnoir suivant la revendication 1 ou 2, caractérisées en ce que l'entrée et la sortie (1) en entonnoir commencent à s'élargir à partir de la distance b = 2,4 s à 3 s du côté de l'angle (7) extérieur formé par le canal (2) de mesure et en ce que la largeur de l'entrée et de la sortie (1) en entonnoir sont en ce point de c = 0,8 à 1,2 s.

4. Entrée et sortie (1) en entonnoir suivant l'une des revendications précédentes, caractérisées en ce que le côté de l'angle (8) intérieur qui est coudé par rapport au côté formé par le canal (2) de mesure s'étend linéairement l'exception d'un retroussement d de 0 à 1,2 s.

5. Entrée et sortie (1) en entonnoir suivant l'une des revendications précédentes, caractérisées en ce que le côté de l'angle (7) extérieur qui est coudé par rapport au côté (6) formé par le canal (2) de mesure a une longueur e comprise entre 8 et 12 s.

6. Entrée et sortie (1) en entonnoir suivant l'une des revendications précédentes, caractérisées en ce que la largeur f des extrémités des ouvertures de l'entrée et de la sortie (1) est de 4 à 6 s.
